# EUROPEAN PATENT APPLICATION

(11) **EP 1 384 400 A2**
(43) Date of publication of application: **28.01.2004**
(21) Application number: 03077211.5
(22) Date of filing: 14.07.2003
(51) Int. Cl.: A01K 13/00, A01J 7/04, A01K 23/00, A01K 1/01

(54) **Device for treating body parts of animals**

(30) Priority: 25.07.2002 NL 1021157
(71) Applicant: A.M. de Rooy bv, 5161 AS Sprang-Capelle (NL)
(72) Inventor: De Rooij, Arie Maurits, 5161 AS Sprang-Capelle (NL)
(74) Representative: Griebling, Onno

(57) **Abstract**

A device (1) for cleaning and/or disinfecting claws of cows has been described. The device (1) comprises sprayers for spraying the back legs of a cow which is present in the device (1). Furthermore, the device (1) comprises a manure receiving plate (30), wherein the manure receiving plate (30) is pivotably connected to an entrance gate (23) and is movable between a receiving position and a discharging position. Under the application of the manure receiving plate (30) it is prevented that manure can fall in the device (1). The manure receiving plate (30) is only put from the receiving position in the discharging position when the entrance gate (23) is opened, whereby it is also prevented that manure may arrive on the ground right in front of the device (1).

Furthermore, the device (1) comprises a PLC unit (50) and two sensors, wherein the PLC unit (50) is adapted to start a treatment program on the basis of a signal which is received from a first sensor.

## Description

The present invention relates to a device for performing a cleaning and/or disinfecting treatment on body parts of animals, comprising a treatment zone which is equipped for receiving the animals to be treated, as well as for treating the body parts of the animals.

A cleaning and/or disinfecting treatment can for example be performed on claws of cows. This is particularly of importance in so-called walking stables, in which the cows usually twice a day walk a fixed route in order to arrive at a milking machine and at food. While walking, the cows come into contact with their own manure and the manure of other cows, as a result of which the cows catch disorders of the claws, such as sores, Mortellaro or foot-rot. These disorders of the cows can be prevented by regularly cleaning and disinfecting the claws.

Cleaning and disinfecting can take place manually, wherein the claws of the cows are sprayed by means of a sprayer. However, this is a very labour-intensive process, and consequently a relatively expensive process. Therefore, devices having a treatment zone have been developed, in which the cow can take place and can be treated. Such devices offer the possibility of letting the treating process take place in a completely automatic manner.

A device for cleaning and disinfecting claws of cows is known from Dutch patent 1009895. The known device comprises a trough on which a cow places her legs when she takes place in the device. In the trough, a spraying system is present, which comprises sprayers for spraying the back legs of the cow with a cleansing agent and a disinfectant. After the cow has left the device again, the trough is cleansed from dirt, which has fallen in the trough during the treatment of the cow, inter alia in the form of manure. In the process, use is made of inter alia sprayers which spray from the front to the back during treating of the cow, wherein the terms "front" and "back" are related to the walking direction of a cow through the device: this is from the front to the back. By means of these sprayers, during the cleaning of the trough, the dirt is sprayed from the front to the back out of the trough via apertures, wherein the dirt arrives behind the trough.

The way in which the device which is known from Dutch patent 1009895 is cleaned has at least two important disadvantages. A first important disadvantage is that the dirt arrives behind the though, as a result of which a cow comes directly into contact with the dirt of previous cows after she has been treated in the device. A second important disadvantage is that cleaning of the trough takes time, which can not be used for receiving and treating a cow.

A device for cleaning and disinfecting of claws of cows is also known from European patent application 1 099 373. In this known device, cleaning of the trough takes place in another manner than the above-described manner. The trough of this known device comprises a pivotably mounted grid and an underlying sieve. Each time after approximately ten cows have visited the device, the trough is cleaned, wherein the grid and the underlying sieve are put in an almost vertical position with the help of a cylinder, wherein dirt which is present on the grid and the sieve glides downwards. Subsequently, the dirt is washed away and discharged by means of sprayers which are present in the trough, which during cleaning of the trough work the other way around and function as pump.

Spraying clean of the trough at the device which is known from European patent application 1 099 373 takes less water than at the device which is known from Dutch patent 1009895, because the pivoting movement of the grid and the sieve makes an important contribution to a movement of the dirt to the back side of the trough. However, in both cases, the cleaning process of the trough involves extra water consumption relative to the consumption for the purpose of spraying clean of the claws of the cows. Furthermore, like the device which is known from Dutch patent 1009895, the device which is known from European patent application 1 099 373 has the disadvantage that cleaning of the trough takes time, which can not be used for receiving and treating a cow.

It is an objective of the present invention to solve at least one of the above-mentioned problems associated with the use of the known devices. This objective is achieved by providing a device, comprising an entrance gate which is located at front side of the device, and which is movable between an opened position and a closed position, and a receiving member for receiving excreta of the animals to be treated and for discharging the excreta outside the treatment zone, which receiving member is pivotably connected to the entrance gate, and is movable between a receiving position and a discharging position.

When a cow is treated in a device according to the invention, manure which she may produce is received by means of the receiving member and discharged outside the treatment zone, so that the manure can not come in the treatment zone. Application of the receiving member does not only offer the possibility of keeping the manure outside of the treatment zone, but also of preventing the manure of arriving in front of and/or behind the device. This can be realised by only putting the receiving member in the discharging position when the entrance gate is in the opened position. Should manure be received, then the manure is deposited next to the device. In the device according to the present invention, it is not necessary to clean the treatment zone with water or another spraying agent after the treatment of one or more cows, because pollution of the treatment zone by manure is prevented.

It is remarked that WO 99/31970 discloses a device for milking animals such as cows, wherein a receiving member is provided for receiving excreta of the animals to be milked, and wherein the receiving member is movable between different positions. In the known milking device, the receiving member is pivotably arranged at an edge of a manure channel, wherein received excreta are discharged to this manure channel. Since the manure channel extends in front of the milking device and the receiving member is disposed at a front side of the milking device, a cow can not enter the milking device from the front side. Therefore, both an entrance gate and an exit gate are located at a side of the milking device, and a cow needs to turn a quarter turn after she has entered the milking device.

An important disadvantage of the known milking device is that turning of the cow takes time. Moreover, the milking device needs to offer space for this movement, as a result of which the cow has freedom of movement in a sideward direction in the position in which she is milked. When the cow is restless, she can free herself from one or more teat cups of the milking device during the milking process, which has the result that the teat cups need to be put on anew, which also takes time.

The device according to the present invention can be entered by a cow when the entrance gate is in the opened position. As soon as a cow is inside the device, the entrance gate is put in the closed position. The entrance gate and the receiving member connected thereto are then located at a back side of the cow. Because the receiving member is put in a right position relative to the cow in this way, it is not necessary that the cow turns herself. As a result, the dimensions of the device can be adapted to the dimensions of the cow in such a way that she can hardly turn or displace herself in a sideward direction.

The present invention will be explained in more detail on the basis of the following description of two treatment devices according to the invention with reference to the drawing, in which equal reference signs designate equal or similar parts, and in which:
figure 1 is a perspective view of a first treatment device according to the present invention;
figure 2 is a side view of the first treatment device according to the present invention;
figure 3 is a top view of the first treatment device according to the present invention;
figure 4 is a top view of a section along the line A-A in figure 2;
figure 5 is a diagrammatical side view of the first treatment device according to the present invention;
figure 6 is a front view of the first treatment device according to the present invention in a first operational state;
figure 7 is a side view of the first treatment device according to the present invention in the first operational state;
figure 8 is a top view of the first treatment device according to the present invention in the first operational state; figure 9 is a back view of the first treatment device according to the present invention in the first operational state;
figure 10 is a front view of the first treatment device according to the present invention in a second operational state;
figure 11 is a side view of the first treatment device according to the present invention in the second operational state;
figure 12 is a side view of the first treatment device according to the present invention in a third operational state;
figure 13 is a side view of a second treatment device according to the present invention, which is provided with a locking mechanism for locking an exit gate of the treatment device; and
figure 14 is a perspective view of a top portion of the treatment device which is shown in figure 13.

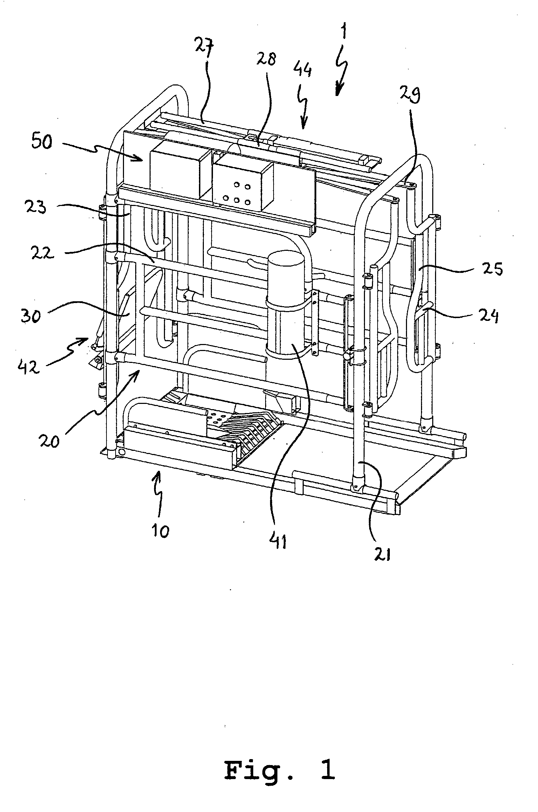

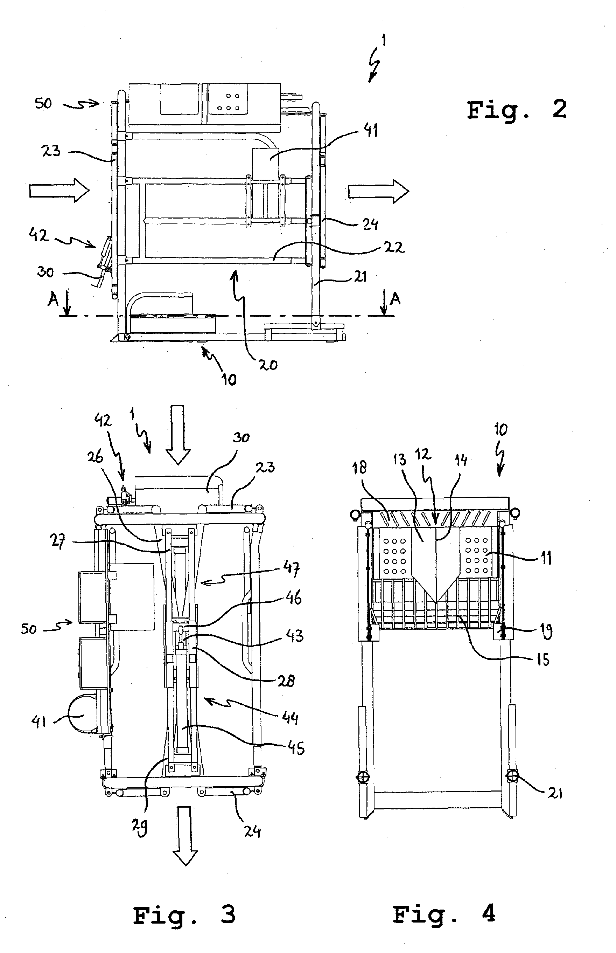

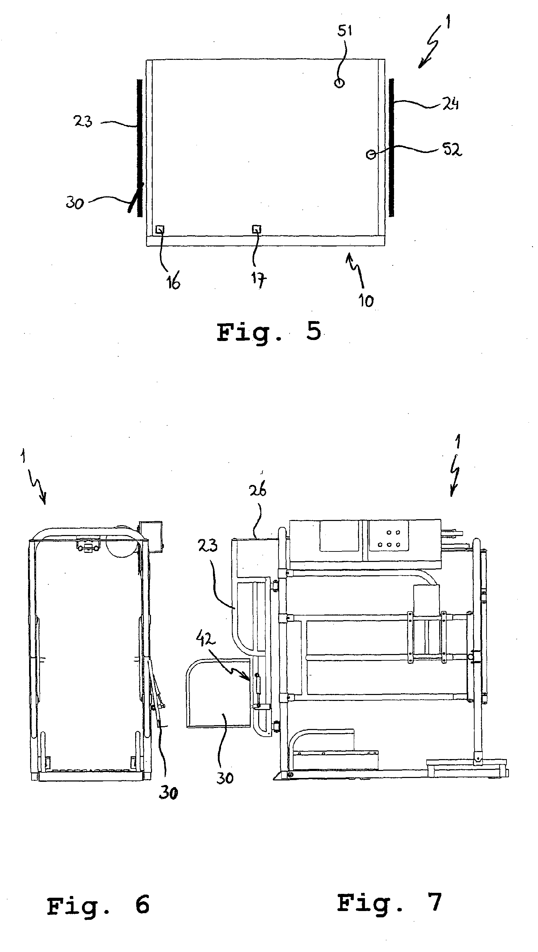

Figures 1-3 show a first treatment device 1 according to the present invention. For the sake of clarity, details of a bottom portion 10 of the first treatment device 1 are not shown in figure 3. Figure 5 is a diagrammatical depiction of the first treatment device 1, wherein a side view of the treatment device 1 is depicted.

In the following, it will be assumed that the first treatment device 1 is suitable for treating cows. However, that does not alter the fact that a treatment device according to the present invention is also suitable for treating other animals, wherein the suitability is particularly associated with the dimensions of the treatment device.

In figures 2 and 3, a desired walking direction of a cow through the first treatment device 1 is depicted by means of arrows. In the following, it will be assumed that the walking direction of the cow is from the front to the back.

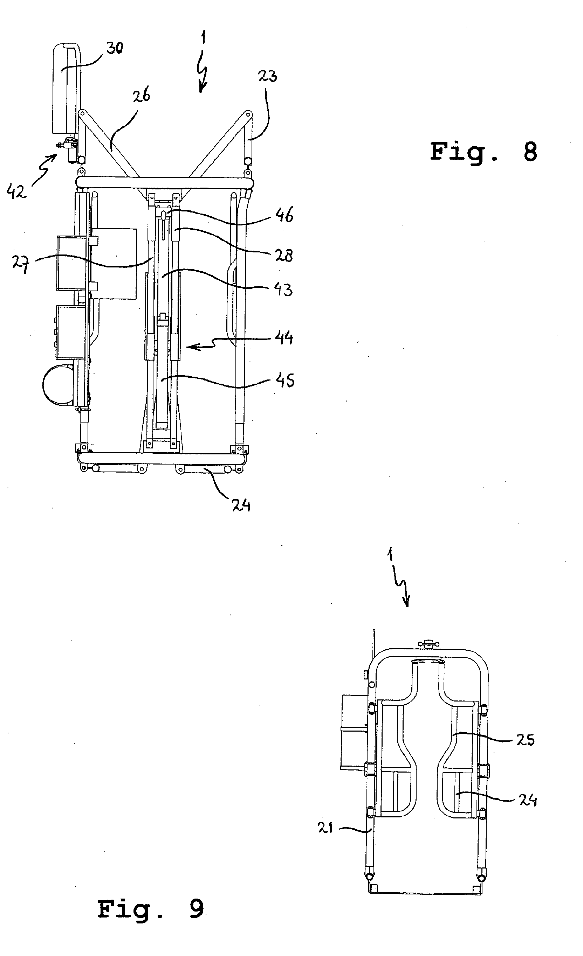

The first treatment device 1 comprises a bottom portion 10, of which figure 4 is a top view. A cage construction 20 is attached on the bottom portion 10, which cage construction 20 has suitable dimensions for receiving a cow and caging a cow in such a way that she has no space to turn herself. The cage construction 20 comprises four posts 21. At both sides, the cage construction 20 comprises a lattice 22 which consists of a number of bars, and which serves to prevent walking out of the cows in a sideward direction. At both the front side and the back side, the cage construction comprises a gate, which consists of two portions which are pivotably connected to the posts 21, wherein the portions consist of a number of bars. In the following, the gate at the front side will be referred to as entrance gate 23, and the gate at the back side as exit gate 24. In figures 1-3, both gates 23, 24 are depicted in a closed position. In figure 1, and also in figure 9, it can be seen that the exit gate 24 is designed in such a way that a space is present between two arched centre bars 25, where a cow can put her head and neck through when she is in the first treatment device 1.

According to an important aspect of the invention, the first treatment device 1 is provided with a manure receiving plate 30, which comprises a flat plate having raised edges, and which is pivotably connected to the entrance gate 23. The manure receiving plate 30 serves for receiving excreta of cows when they are in the first treatment device 1. Preferably, the manure receiving plate 30 is disposed at such a height that the manure can almost directly be received from the cows. The raised edges serve for preventing that received manure can glide off the manure receiving plate 30 too easily.

The bottom portion 10, of which a top view is shown in figure 4, comprises at the front side two positioning surfaces 11 for supporting the back legs of a cow. In order to guarantee that a cow indeed places her back legs on the positioning surfaces 11, a centre portion 12 having two slanting surfaces 13 is provided, wherein the surfaces 13 slope down at both sides of a centre line 14 through which the surfaces 13 are connected. At the back side of the positioning surfaces 11, along the entire width of the bottom portion 10, a grid 15 is present, which slopes up in the walking direction of the cows, and subsequently slopes down again. A cow which takes place in the first treatment device 1 shall place her back legs on the positioning surfaces 11, because she will experience standing on the slanting surfaces 13 of the centre portion 12 and of the portion of the grid 15 which slopes up as being uncomfortable, and shall notice that the positioning surfaces 11 form a stable basis.

On the bottom portion 10, a number of sprayers 16, 17 having spraying nozzles (not shown) is present, wherein one sprayer 16, 17 has a plurality of spraying nozzles. In the diagrammatical depiction of figure 5, the sprayers 16, 17 are indicated by means of squares. Preferably, the first treatment device 1 comprises two back sprayers 16 for spraying the back side of the back legs of a cow, which are arranged at the front side of the treatment device 1 and are capable of spraying from the front to the back. Furthermore, the first treatment device 1 preferably comprises two front sprayers 17 for spraying the front side of the back legs of a cow, which are arranged at a suitable distance from the front side of the treatment device 1 and are capable of spraying from the back to the front.

In the example of the bottom portion 10 which is shown in figure 4, the back sprayers 16 are for example arranged in a low, hollow threshold 18, which is located at the front side of the bottom portion 10 and which is at least at the back side provided with apertures, and the front sprayers 17 are for example arranged in covers 19, which are positioned at the sides of the bottom portion 11, and which are at least at the front side provided with apertures. The apertures in the threshold 18 and the covers 19 are so small that the cows can not touch the sprayers 16, 17. This is an important advantage, because in that case the sprayers 16, 17 can not be damaged by the cows.

A first group of spraying nozzles of the sprayers 16, 17 is via a first valve (not shown) connected to a system for supplying water (not shown). In an operational state "water on", the first valve is opened and the sprayers 16, 17 spray water via the spraying nozzles of the first group. A second group of spraying nozzles of the sprayers 16, 17 is via a second valve (not shown) connected to a system for supplying disinfectant, which comprises a tank 41 containing the disinfectant. In an operational state "disinfectant on", the second valve is opened and the sprayers 16, 17 spray disinfectant via the spraying nozzles of the second group. In an operational state "off", the first valve and the second valve are closed and the sprayers 16, 17 are consequently disconnected from the system for supplying water and the system for supplying disinfectant.

The portions of the entrance gate 23, the portions of the exit gate 24 and the manure receiving plate 30 can be moved by means of a compressed air system, which for example comprises a compressor (not shown) for supplying the compressed air, wherein the compressor can be arranged outside the first treatment device 1. An advantage of the application of a compressed air system is that a "cow-friendly" treatment device 1 is obtained, wherein the cows easily can get used to movements and sounds which take place. Preferably, a relatively low pressure is prevailing in the compressed air system, for example in a range of 4-6 bar.

For the purpose of moving the manure receiving plate 30, a cylinder of a piston/cylinder device 42 which is operable by means of compressed air is connected to the entrance gate 23, and a piston of said piston/cylinder device 42 is connected to the manure receiving plate 30. The piston/cylinder device 42 is part of the compressed air system, and is connected to the compressor by means of compressed air lines (not shown). The joint between the manure receiving plate 30 and the piston of the piston/cylinder device 42 is located in front of an imaginary line over which the manure receiving plate 30 is pivotable with respect to the entrance gate 23, so that the manure receiving plate 30 is put in a more standing position on extension of the piston with respect to the cylinder, and is put in a more lying position on retraction of the piston with respect to the cylinder.

For the purpose of moving the portions of the entrance gate 23, a piston 43 of a piston/cylinder device 44 which is operable by means of compressed air is connected to the portions of the entrance gate 23 by means of two bars 26, and a cylinder 45 of said piston/cylinder device 44 is connected to the cage construction 20. At one end, the bars 26 are pivotably connected to a head 46 of the piston 43, and, at another end, the bars are pivotably connected to the portions of the entrance gate 23. The piston/cylinder device 44 is part of the compressed air system, and is connected to the compressor by means of compressed air lines (not shown). On extension of the piston 43 with respect to the cylinder 45, the entrance gate 23 is put in a more opened position via the bars 26, and on retraction of the piston 43 with respect to the cylinder 45, the entrance gate 23 is put in a more closed position via the bars 26. For the purpose of guiding a movement of the piston 43, two parallel guidance bars 27 and two guidance covers 28 which are slidable along guidance bars 27 are provided, wherein the head 46 of the piston 43 is fixedly connected to said guidance covers 28.

For the purpose of moving the portions of the exit gate 24, the first treatment device 1 comprises a similar construction as described in the above for moving the portions of the entrance gate 23. In figure 3, the piston/cylinder device of this construction is indicated by means of reference numeral 47. In figures 1 and 3, the bars which are pivotably connected to the piston of the piston/cylinder device 47 on the one hand and the exit gate 24 on the other hand are indicated by means of reference numeral 29.

According to an important aspect of the present invention, the first treatment device 1 can function in a completely automatic manner, without external interference. For this purpose, the first treatment device 1 comprises a PLC unit 50 or another suitable controlling unit, which is adapted to control the operational states of the sprayers 16, 17, the positions of the gates 23, 24 and the positions of the manure receiving plate 30 according to at least one fixed program. Furthermore, the first treatment device 1 comprises two sensors 51, 52 which are indicated by means of circles in the diagrammatical depiction of figure 4. In the shown example, a first sensor 51 is arranged at the upper side of the first treatment device, in the vicinity of the back side of the treatment device 1, while a second sensor 52 is arranged at the back side of the treatment device 1, approximately halfway the total height of the treatment device 1. The first sensor 51 serves for detecting whether a cow has entered the treatment device 1. If that is the case, the first sensor transmits a signal to the PLC unit 50, on the basis of which a program for inter alia spraying the back legs of the cow is started. The second sensor 52 serves for detecting whether a cow has left the treatment device 1.

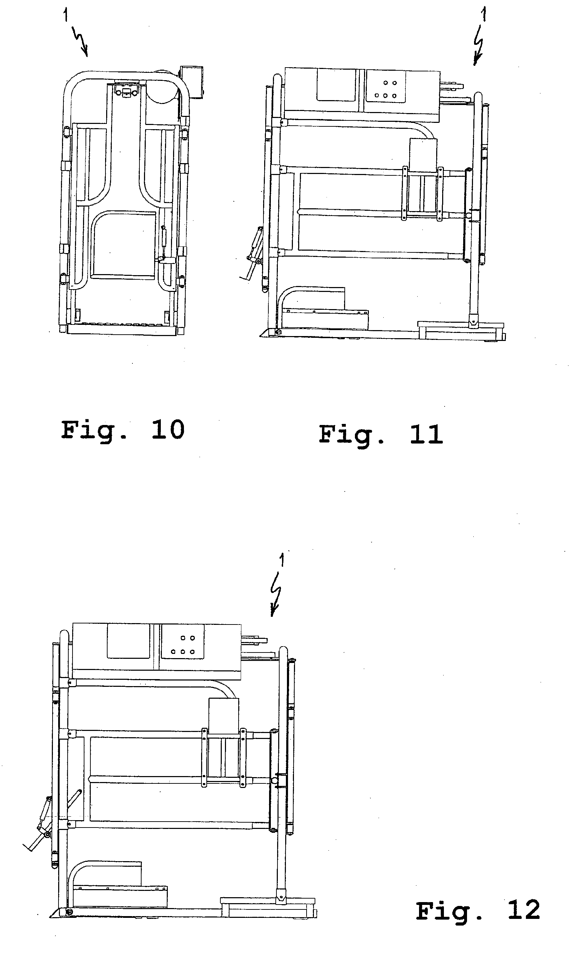

In figures 6-9, a first operational state of the first treatment device 1, in which the entrance gate 23 is in an opened position, the exit gate 24 is in a closed position, the manure receiving plate 30 is in a standing position or discharging position, and the sprayers 16, 17 are in the operational state "off", is shown, wherein, for the sake of clarity, the exit gate 24 is not shown in figure 6, and details of the bottom portion 10 are not shown in figure 8. Starting from the first operational state, the first treatment device 1 can for example pass through the following cycle:
1) When the first sensor 51 detects that a cow has entered the first treatment device 1, this transmits a signal to the PLC unit 50, on the basis of which a treatment program which has been laid down in the PLC unit 50 is started.
2) According to the treatment program, the piston 43 is retracted with respect to the cylinder 45 of the piston/cylinder device 44, as a result of which the entrance gate 23 is put in a closed position. The first treatment device 1 now is in a second operational state as shown in figures 10 and 11, in which the cow is caged in the treatment device 1.
3) According to the treatment program, the piston is retracted with respect to the cylinder of the piston/cylinder device 42, as a result of which the manure receiving plate 30 is put in a more lying position or receiving position, in which the manure receiving plate 30 is suitable for receiving excreta of the cow. The first treatment device 1 is now in a third operational state as shown in figure 12.
4) According to the treatment program, the sprayers 16, 17 are put in the operational state "water on", during a period of approximately 10 seconds, in order to rinse the claws of the cow.
5) According to the treatment program, the sprayers 16, 17 are put in the operational state "disinfectant on", during a period of approximately 3 seconds, to disinfect the claws of the cow.
6) According to the treatment program, the sprayers 16, 17 are put in the operational state "off".
7) According to the treatment program, the piston is extended with respect to the cylinder of the piston/cylinder device 47, as a result of which the exit gate 24 is put in an opened position. The first treatment device 1 is now in a fourth operational state (not shown).
8) When the second sensor 52 detects that the cow has left the first treatment device 1, this transmits a signal to the PLC unit 50, on the basis of which an initialisation program which has been laid down in the PLC unit 50 is started.
9) According to the initialisation program, the piston is retracted with respect to the cylinder of the piston/cylinder device 47, as a result of which the exit gate 24 is put in a closed position.
10) According to the initialisation program, the piston 43 is extended with respect to the cylinder 45 of the piston/cylinder device 44, as a result of which the entrance gate 23 is put in an opened position.
11) According to the initialisation program, the piston is extended with respect to the cylinder of the piston/cylinder device 42, as a result which the manure receiving plate 30 is put in a discharging position, in which received excreta glide off the manure receiving plate 30. The first treatment device 1 is now in the first operational state again, and the cycle can be passed through again.

The total length of the cycle as described in the above is for example 38 seconds. There is no waiting time for cleaning actions, so that it is actually possible to treat a cow every 38 seconds.

The described cycle is only meant as an example. For example, other values may be chosen for the duration of the period during which the legs of a cow are sprayed with water and disinfectant.

The first treatment device 1 can also be operated manually, which is advantageous in situations in which a cow still needs to get used to the treatment device 1, or in which a demonstration is given of the different possibilities of the treatment device 1.

Directly after a cow has entered the first treatment device 1, the entrance gate 23 is closed and the manure receiving plate 30 is put in a receiving position. In this way, it is prevented that manure can fall on the bottom portion 10 of the first treatment device 1, or on the ground right in front of the treatment device 1. As soon as the cow has left the first treatment device 1 again, the entrance gate 23 is put in an opened position again and the manure receiving plate 30 is put in a discharging position. Should manure be received, then the manure is deposited next to the first treatment device 1. This is a big advantage of the present invention, because due to this, the area over which the cows walk before they enter the first treatment device 1, as well as the bottom portion 10 of the first treatment device 1, are being kept free from manure. Moreover, on application of the manure receiving plate 30, no extra cleaning actions are needed. The first treatment device 1 is not polluted by manure of the cows which take place in it, and dirt and/or manure which is present at the back legs of the cows before the treatment is washed away by the water during the treatment, wherein the positioning surfaces 11 are rinsed as well. The positioning surfaces 11 are perforated, so that the water can wash away directly. An additional advantage of the fact that no extra cleaning actions are needed is that the time can effectively be devoted to treating the cows, wherein the cows can follow each other without having to wait until the first treatment device 1 is cleaned.

Advantageously, the claws of the cows are sprayed with water first, before they are sprayed with disinfectant, so that the dirt is removed from the claws of the cows before the disinfecting process takes place. It will be clear that in this way, disinfecting of the claws of the cows takes place in an effective manner.

It has been described in the foregoing that the first treatment device 1 comprises two sensors 51, 52. However, it is also possible to design the treatment device 1 with one sensor. In such case, this sensor has the function of detecting whether a cow has entered the treatment device 1, and the function of detecting whether the cow has left the treatment device 1 again.

An advantage of applying at least one sensor is that a relatively simple, independent system for detecting the cows is obtained, wherein it is not necessary to make use of detection systems which may already exist, such as recognition systems. With the help of the at least one sensor and the at least one program which has been laid down in the PLC unit 50, an almost automatic functioning of the first treatment device 1 is possible.

Cows do not experience any problems in entering the first treatment device 1 and letting themselves be treated in there. As has already been remarked in the foregoing, it is possible to make use of manual operation in order to let the cows get used to the first treatment device 1. The cows can be urged to pay a visit to the first treatment device 1 by disposing this at a strategic place, for example on the path which the cows take when they walk from a milking machine to a feeding place.

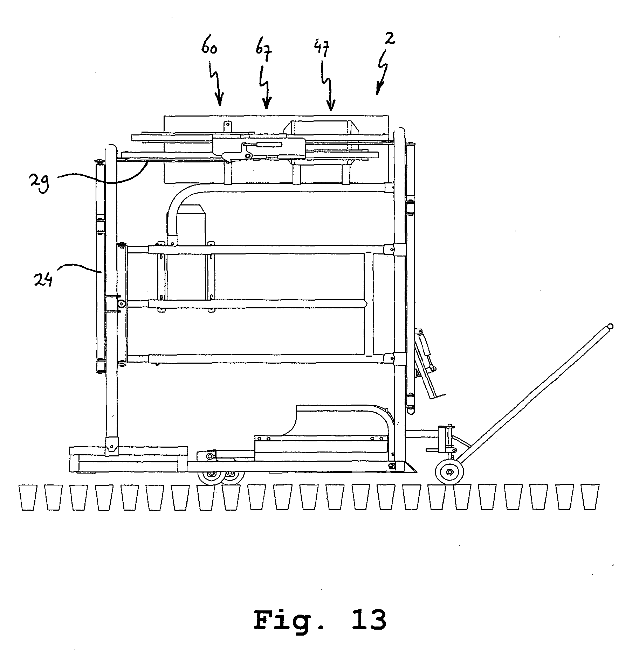

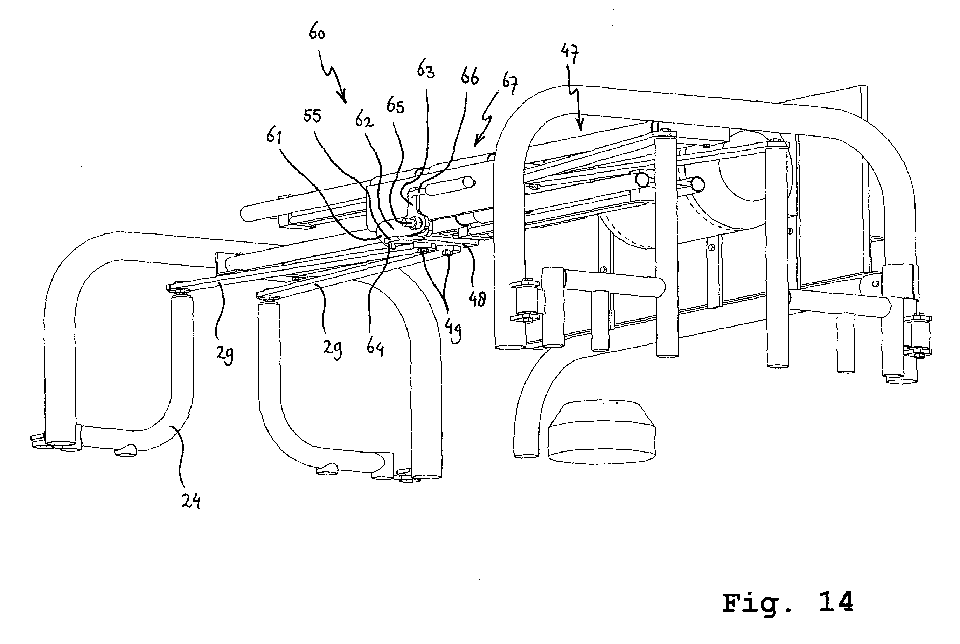

Figure 13 shows a second treatment device 2 according to the present invention, which is provided with a locking mechanism 60 for locking the exit gate 24, and which for the rest is constructed in a similar manner as the first treatment device 1 which has been described in the foregoing. Figure 14 shows an upper portion of the second treatment device 2, of which the locking mechanism 60 is part.

As has been remarked before in relation to the first treatment device 1, the portions of the exit gate 24 are connected to a piston/cylinder device 47 by means of bars 29, wherein the bars 29 are at one end pivotably connected to a head of a piston of the piston/cylinder device 47. In figure 14, it can be seen that the connection between the respective end of the bars 29 and the head of the piston of the piston/cylinder device 47 is realised by means of a connection plate 48. This connection plate 48 is rigidly connected to the head of the piston of the piston/cylinder device 47, while the ends of the bars 29 are pivotably connected to the connection plate 48. In the shown example, bolts 49 have been applied for the purpose of the connection between the connection plate 48 and the ends of the bars 29. The connection plate 48 is provided with a protrusion 55, which extends from the connection plate 48 in a sideward direction. This protrusion 55 plays an important role in locking the exit gate 24, in a way which shall be elucidated in the following.

The locking mechanism 60 comprises a locking arm 61 which is rotatable about a bolt 65. The locking arm 61 comprises an elongated basic body 62, at one side of which an operating arm 63 extends, and at another side of which a retaining part 64 extends. An end of the operating arm 63 is pivotably connected to a piston 66 of a piston/cylinder device 67, which is fixedly connected to the upper portion of the second treatment device 2. By means of the piston/cylinder device 67, the locking arm 61 is movable between a locking position and a free position. The locking arm 61 can be put from the locking position to the free position by retracting the piston 66 with respect to the cylinder. Contrariwise, the locking arm 61 can be put from the free position in the locking position by extending the piston 66 with respect to the cylinder. Figures 13 and 14 show the locking arm 61 in the locking position.

The locking arm 61 is disposed in such a way that when this is in a locking position, and the exit gate 24 is in a closed position, the retaining part 64 contacts a back side of the protrusion 55 of the connection plate 48. In this way, a backward movement of the head of the piston of the piston/cylinder device 47, which is connected to the connection plate 48, which movement may take place under the influence of a force which is exerted by a cow, is prevented, so that the exit gate 24 can not be opened. The exit gate 24 can only be put in the opened position when the locking arm 61 is put in the free position by means of retracting the piston 66 with respect to the cylinder of the piston/cylinder device 67.

During operation of the second treatment device 2, the movements of the piston which is connected to the portions of the exit gate 24 via the connection plate 48 and the bars 29, and the movements of the piston 66 which is connected to the locking arm 61 are accurately geared to one another. As soon as the exit gate 24 is in the closed position, the piston 66 is extended with respect to the cylinder of the piston/cylinder device 67, and the locking arm 61 is put in the locking position. When it should subsequently be possible to open the exit gate 24 again, the piston 66 is retracted with respect to the cylinder of the piston/cylinder device 67, and the locking arm 61 is put in the free position. It will be clear that controlling of the respective piston/cylinder devices takes place under the application of the PLC unit 50.

The locking mechanism 60 can be designed in another way than described in the above. It is of importance that the locking mechanism 60 is able to prevent that, under the influence of a force which is exerted by a cow, the piston can extend with respect to the cylinder of the piston/cylinder device 47, which piston is connected to the portions of the exit gate 24 via the connection plate 48 and the bars 29, in case of the exit gate 24 being in the closed position. It is also of importance that the locking mechanism 60 is able to release the piston of the piston/cylinder device 47, so that the exit gate 24 can be opened freely when intended. It is not necessary that the locking mechanism 60 directly of indirectly engages the piston of the piston/cylinder device 47; the locking mechanism 60 can for example also engage the portions of the exit gate 24.

An advantage of the application of the locking mechanism 60 is that the exit gate 24 can be closed quickly. When no locking mechanism 60 would be present, the exit gate 24 should be closed and be kept in the closed position by a relatively high force, wherein the force should be higher than the force which may be exerted by a cow. Due to the relatively high force, closing of the exit gate 24 must take place slowly, in order to prevent that a cow which is present in the treatment device gets trapped. Under the application of the locking mechanism 60, it is possible to quickly close the exit gate 24 by a relatively low force. Due to the relatively low force, quickly closing the exit gate 24 does not give any danger for the cow. The force which is needed in order to prevent that a cow is able to push open the exit gate 24 is supplied by the locking mechanism 60. Quickly closing the exit gate 24 is of importance, because the time during which a cow stays in the second treatment device 2 is reduced due to this.

As has been remarked earlier in relation to the first treatment device 1, the portions of the exit gate 24 can be moved by means of a compressed air system, in which a relatively low pressure is prevailing, for example in a range of 4-6 bar. Because of the application of the locking mechanism 60, it is not necessary to employ high pressures. When the second treatment device 2 would not comprise a locking mechanism 60 and the exit gate 24 would be kept in the closed position by means of pressure exclusively, then the pressure would become higher by a factor of 10 to 20.

It will be clear to a person skilled in the art that the scope of the present invention is not limited to the examples discussed above, but that several amendments and modifications thereof are possible without deviating from the scope of the invention as defined in the appended claims.

Instead of the shown manure receiving plate 30, it is also possible to apply other suitable means, wherein it is of importance that these means are capable of receiving the excreta of a cow which is present in the treatment device 1, 2, and that these means are capable of subsequently depositing the received excreta at a position outside the place where the treatment of the claws of the cows take place.

There are many ways in which the treatment device 1, 2 can be constructed. Preferably, metal bars are applied for the cage construction 20, so that a solid construction is obtained. Instead of the compressed air system and the piston/cylinder devices 42, 44, 47, other suitable parts can be applied, under the application of which movements of the gates 23, 24 and the manure receiving plate 30 can be realised. Instead of the PLC unit 50, another suitable controlling unit can be applied.

The present invention is described in the context of cleaning and/or disinfecting claws of cows, but that does not alter the fact that the invention is also applicable to cleaning and/or disinfecting other body parts, for example udders. In such case, a treatment device according to the invention can exclusively be equipped for treating udders, but can also be equipped for treating udders and claws. In such a treatment device, sprayers have been arranged on such a position that they are capable of spraying the udder of a cow with a disinfectant, for example. Other examples of an application of the present invention are an application in which the front legs of the cow need to be treated, and an application in which the back of the cow needs to be treated. In the latter example, it concerns applying an agent for keeping away insects.

In an important embodiment, the treatment device according to the present invention is equipped for performing a number of different treatments. In the following, such a treatment device will be referred to as multi-treatment device. For example, the multi-treatment device can be suitable to spray the back legs, the udder and the back of a cow with an agent. Preferably, in such an embodiment, different programs are laid down in the PLC unit 50. In the following, seven possible programs are mentioned as an arbitrary example.
Program 1: rinsing the claws of the cow
Program 2: rinsing and applying a nursing agent to the claws of the cow
Program 3: rinsing and applying a nursing agent to the claws of the cow; applying a nursing agent to the udder of the cow
Program 4: rinsing the claws of the cow; applying a nursing agent to the udder of the cow
Program 5: applying a nursing agent to the udder of the cow; applying an agent for keeping away insects to the back of the cow
Program 6: applying an agent for keeping away insects to the back the cow
Program 7: applying a nursing agent to the udder of the cow

It is possible that a user of the multi-treatment device is allowed to enter a personal program in the PLC unit 50.

As has been remarked earlier in relation to the first treatment device 1, the multi-treatment device can also be operated manually. In such case, the PLC unit 50 comprises keys with which the entrance gate 23 and the exit gate 24 can be opened and closed manually, and with which the different treatments can be started manually.

Advantageously, the shown treatment devices 1, 2 and the above described multi-treatment device are part of a so-called cow management system. Usually, such a system makes use of a computer program, a so-called cow management program, in which all kinds of data are laid down per cow, which on the one hand concern a history which is related to the cow, for example an amount of milk which has been delivered by the cow, and on the other hand a plan which is related to the cow, for example an amount of food which needs to be administered to the cow. When the treatment device 1, 2 according to the present invention is received in the cow management system, then it is possible to record data concerning both the history and the plan with regard to treatments per cow. On the basis of the treatment plan, the treatment device 1, 2 may be controlled, so that every cow can be subjected to a specific treatment. In the case in which the multi-treatment device is applied, it is for example possible to choose which body parts of the cow need a treatment and which agent needs to be applied for the treatment(s). In this way, the cows can be nursed in an optimal manner. It will be clear that in case every cow should receive a specific treatment, it is very advantageous to apply an automatic recognition system, wherein every cow is provided with a specific identification mark, for example a collar having a chip, and wherein the treatment device 1,2 is provided with means for recognizing the identification mark. Preferably, the treatment device 1, 2 is provided with a board computer which is connected to a central computer running the cow management program.

## Claims

1. Device (1, 2) for performing a cleaning and/or disinfecting treatment on body parts of animals, comprising:
- a treatment zone (10, 20) which is equipped for receiving the animals to be treated, as well as for treating the body parts of the animals;
- an entrance gate (23) which is located at a front side of the device (1, 2), and which is movable between an opened position and a closed position; and
- a receiving member (30) for receiving excreta of the animals to be treated and for discharging the excreta outside the treatment zone (10, 20), which receiving member (30) is pivotably connected to the entrance gate (23), and is movable between a receiving position and a discharging position.

2. Device (1, 2) according to claim 1, further comprising a controlling unit (50) and at least one sensor (51) for detecting the presence of an animal to be treated in the device (1,2), wherein the controlling unit (50) is adapted to start a program on the basis of a signal which is received from the at least one sensor (51).

3. Device (1, 2) according to claim 1 or 2, further comprising a piston/cylinder device (42) for setting the position of the receiving member (30), which piston/cylinder device (42) preferably is part of a compressed air system (40).

4. Device (1, 2) according to any of claims 1-3, which at a back side is provided with an exit gate (24) which is movable between an opened position and a closed position, wherein the exit gate (24) is provided with an aperture for letting through the head and the neck of the animals to be treated.

5. Device (2) according to claim 4, comprising a locking mechanism (60) for locking the exit gate (24) when the exit gate (24) is in the closed position, which locking mechanism is movable between a locking position and a free position.

6. Device (1, 2) according to any of claims 1-5, wherein the treatment zone (10, 20) comprises at least two perforated positioning surfaces (11) for supporting at least two legs of the animals to be treated.

7. Device (1, 2) according to claim 6, wherein at least a portion of the circumference of each positioning surface (11) is connected to slanting surfaces (13, 15), which slope down in a direction toward the positioning surface (11).

8. Device (1, 2) according to any of claims 1-7, further comprising sprayers (16, 17) for spraying body parts of animals with a treatment fluid, wherein the sprayers (16, 17) are disposed in coverings (18, 19) which are provided with apertures.

9. Device (1, 2) according to claim 8, wherein the sprayers (16, 17) are disposed in a hollow threshold (18) which is located at a front side of the device, and which has apertures which are located at least at a back side, and in covers (19) which are positioned at sides of the device (1), and which have apertures which are located at least at a front side.

10. Device (2) for performing a cleaning and/or disinfecting treatment on body parts of animals, comprising:
- a treatment zone (10, 20) which is equipped for receiving the animals to be treated, as well as for treating the body parts of the animals;
- an exit gate (24) which is located at the back side of the device (2), and which is movable between an opened position and a closed position; and
- a locking mechanism (60) for locking the exit gate (24) when the exit gate (24) is in the closed position, which locking mechanism is movable between a locking position and a free position.

11. Device (2) according to claim 10, further comprising a piston/cylinder device (47) for moving the exit gate (24), wherein the locking mechanism (60) is adapted to prevent a movement of a piston of the piston/cylinder device (47) with respect to a cylinder of the piston/cylinder device (47) in the locking position.

12. Device (2) according to claim 10 or 11, wherein the locking mechanism (60) comprises a rotatably arranged locking arm (61), which preferably is connected to a piston/cylinder device (67) for bringing about a rotational movement of the locking arm (61).
